# FASCICULE DE BREVET EUROPEEN

(11) **EP 3 102 370 B1**
(45) Date de publication et mention de la délivrance du brevet: **07.04.2021**
(21) Numéro de dépôt: 15704508.9
(22) Date de dépôt: 05.02.2015
(51) Int. Cl.: B25J 15/06

(54) **CAISSON A VIDE MODULAIRE**
MODULAR SAUGGREIFER
MODULAR VACUUM GRIPPER

(30) Priorité: 06.02.2014 FR 1450930
(43) Date de publication de la demande: 14.12.2016
(73) Titulaire: COVAL, 26120 Montelier (FR)
(72) Inventeur: PINET, Maxime, F-26120 Montmeyran (FR); CECCHIN, Michel, F-26120 Montelier (FR); MILHAU, Pierre, F-26300 Bourg De Péage (FR)
(74) Mandataire: Decorchemont, Audrey Véronique Christèle
(86) Numéro de dépôt international: PCT/EP2015/052453
(87) Numéro de publication internationale: WO 2015/118086

(56) Documents cités:
- DE-A1- 2 910 145
- DE-A1- 3 028 763
- DE-U1- 9 307 503
- DE-U1- 9 418 579
- FR-A1- 2 601 088
- US-A- 2 535 952
- US-A- 3 222 051
- US-A- 3 366 410
- US-A- 3 591 228
- US-A1- 2006 082 172
- US-A1- 2010 040 450

## Description

L'invention concerne les appareils de préhension et plus particulièrement un caisson modulaire à vide pour préhension d'une pièce.

### ARRIERE PLAN DE L'INVENTION

Les caissons à vide sont utilisés dans de nombreux domaines industriels (industrie automobile, pharmaceutique, etc.), par exemple pour des applications de préhension ou de manipulation de pièces dans une chaîne de production.

Les caissons à vide associés à un générateur de vide pneumatique ou électrique comportent un plateau de préhension sur lequel sont montés des moyens de préhension destinés à effectuer une prise de la pièce lorsque l'air contenu à l'intérieur du caisson est aspiré. Ces moyens de préhension sont constitués le plus souvent soit par un certain nombre de ventouses, soit par une plaque de mousse comportant un certain nombre de points de préhension.

Chaque application de préhension particulière possède ses propres contraintes. Ainsi, les pièces que sont susceptibles de manipuler les caissons à vide sont de forme, de poids et de taille variables. De plus, les niveaux de vide requis, les temps de cycle de préhension sont différents selon les applications.

Le document US 3 591 228 A divulgue un exemple de caisson à vide modulaire.

Les caissons à vide doivent donc être fabriqués de manière à répondre aux contraintes propres à l'application de préhension particulière dans laquelle ils sont utilisés. Il est donc relativement complexe de mettre en œuvre des procédés de fabrication en série de ces caissons et donc de fabriquer ces caissons en un temps réduit et à un coût réduit.

### OBJET DE L'INVENTION

L'invention a pour objet de réduire le coût et le temps de fabrication d'un caisson à vide, et de simplifier la fabrication des caissons à vide de différents formats.

### RESUME DE L'INVENTION

En vue de la réalisation de ce but, on propose un caisson à vide modulaire pour préhension d'une pièce, comportant :
- une première plaque formant une paroi supérieure du caisson ;
- une deuxième plaque percée par au moins un orifice aval et formant une paroi inférieure du caisson ;
- des membrures auxquelles sont fixées des bords de la première plaque et de la deuxième plaque et qui forment des parois latérales du caisson ;
- des moyens d'assemblage pour assembler la première plaque, la deuxième plaque et les membrures ;
- au moins un orifice amont situé sur l'une des parois du caisson ;
- des moyens d'étanchéité pour interdire un échange d'air entre l'intérieur du caisson et l'extérieur du caisson autre qu'à travers l'orifice amont et l'orifice aval ;
- des moyens de génération de vide adaptés à aspirer l'air contenu à l'intérieur du caisson via l'orifice amont pour générer du vide dans le caisson ;
- au moins un élément déformable s'étendant sur la deuxième plaque et présentant un orifice de passage d'air en regard de l'orifice aval pour former une surface de contact étanche avec la pièce lorsque l'air contenu à l'intérieur du caisson est aspiré.

Le dimensionnement du caisson à vide de l'invention pour une application de préhension particulière requiert, au cours de sa fabrication, un nombre limité d'opérations relativement simples. Le dimensionnement consiste notamment à dimensionner et à fabriquer les membrures en fonction des contraintes de l'application de préhension particulière, puis à adapter la première plaque et la deuxième plaque en fonction des dimensions des membrures. La fabrication de la deuxième plaque est relativement simple, et peut être réalisée par exemple par découpage d'une plaque similaire préalablement fabriquée de surface plus importante. La première plaque est fabriquée de la même manière. Les membrures, quant à elle, sont obtenues à partir de membrures préalablement fabriquées de longueur plus importantes qui sont découpées pour présenter une longueur correspondant à la longueur et à la largeur de la deuxième plaque.

Le dimensionnement du caisson à vide de l'invention est donc compatible avec une fabrication en série efficace qui permet de réduire le coût et le temps de fabrication du caisson.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés, parmi lesquels :
- la figure 1 représente une vue en perspective d'un caisson modulaire à vide selon un premier mode de réalisation de l'invention, et d'une pièce manipulée par le caisson ;
- les figure 2 à 4 sont des vues de détail du caisson modulaire à vide selon l'invention en cours d'assemblage ;
- la figure 5 représente une vue en coupe d'un profilé d'une membrure du caisson ;
- la figure 6 est une vue de détail de l'intérieur du caisson modulaire à vide selon l'invention, sur laquelle est visible un pion de protection anti-implosion ;
- la figure 7 est une vue en perspective d'un caisson modulaire à vide selon un deuxième mode de réalisation de l'invention, ledit caisson étant représenté sans ses parois supérieure et inférieure ;
- la figure 8 représente une vue en perspective d'un caisson modulaire à vide selon un troisième mode de réalisation de l'invention.

### DESCRIPTION DETAILLEE DE L'INVENTION

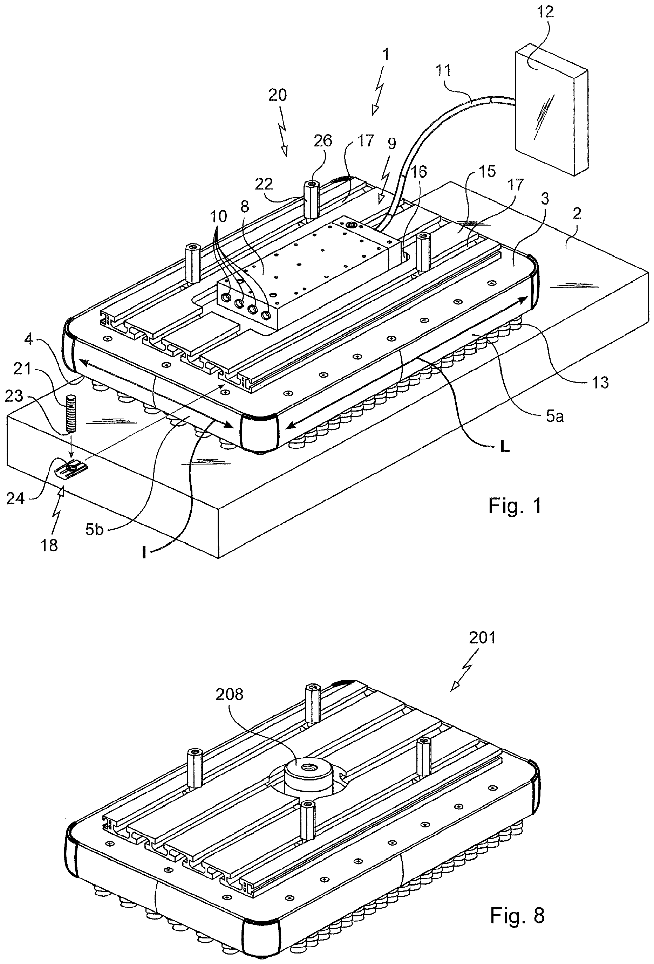

En référence à la figure 1, l'invention concerne un caisson modulaire à vide 1 pour préhension d'une pièce, utilisé ici dans une application de manipulation d'un carton 2 comprenant par exemple des produits alimentaires, ledit carton 2 présentant une forme parallélépipédique et un poids et une taille relativement importants.

Le caisson modulaire à vide 1 selon l'invention comporte une première plaque 3 formant une paroi supérieure du caisson à vide 1, une deuxième plaque 4 formant une paroi inférieure du caisson à vide 1, et des membrures 5 auxquelles sont fixées des bords de la première plaque 3 et de la deuxième plaque 4 et qui forment des parois latérales du caisson à vide 1. La première plaque 3 est percée par un orifice amont, alors que la deuxième plaque est percée par un certain nombre d'orifices aval.

Des moyens de génération de vide, fonctionnant par effet Venturi, sont montés sur la première plaque 3. Dans un premier mode de réalisation du caisson à vide 1, visible sur la figure 1, ces moyens de génération de vide sont constitués d'un générateur de vide 8 dit « multi-étagé » qui comporte un orifice d'entrée 9 d'air comprimé et des orifices d'échappement 10. L'orifice d'entrée 9 est relié à plusieurs chambres de génération de vide disposées en série à l'intérieur du générateur de vide 8, l'une derrière l'autre. Chacune de ces chambres comporte une buse et au moins un orifice latéral communiquant via l'orifice amont de la première plaque 3 avec l'intérieur du caisson à vide 1. Lorsque de l'air comprimé est admis par l'orifice d'entrée 9, l'air contenu à l'intérieur du caisson à vide 1 est aspiré par les orifices latéraux via l'orifice amont, ce qui génère du vide à l'intérieur du caisson à vide 1. L'orifice d'entrée 9 est relié par un tuyau 11 à une unité de commande 12 reliée à une source d'air comprimé non représentée sur la figure 1.

Un certain nombre d'éléments déformables, en l'occurrence des ventouses 13, s'étendent sur la deuxième plaque 4. Les ventouses 13 sont ici montées sur des inserts eux-mêmes fixés par vissage ou par clipsage sur la deuxième plaque 4. Chaque ventouse 13 présente un orifice de passage d'air positionné en regard d'un orifice aval de la deuxième plaque 4. Lorsque du vide est généré à l'intérieur du caisson à vide 1, l'air contenu dans chaque ventouse 13 est aspiré via l'orifice de passage de la ventouse 13 et l'orifice aval en regard.

Ainsi, lorsque le générateur de vide 8 aspire l'air contenu à l'intérieur du caisson à vide 1, les ventouses 13 préalablement appliquées sur la surface du carton 2 sont solidarisées à celui-ci et réalisent une préhension du carton 2.

Pour manipuler le carton 2 suite à une préhension de celui-ci, il suffit donc de manipuler le caisson à vide 1. Le caisson à vide 1 comporte à cet effet des moyens de fixation situés sur la première plaque 3. Ces moyens de fixation sont destinés à fixer une extrémité d'un bras de préhension (non représenté sur les figures) au caisson à vide 1, ledit bras de préhension étant ensuite piloté manuellement ou automatiquement pour manipuler le caisson à vide 1 et donc le carton 2.

Les moyens de fixation comportent au moins une partie profilée, en l'occurrence une plaque profilée 15 positionnée sur la première plaque 3. La plaque profilée 15 présente une ouverture 16 à l'intérieur de laquelle est positionné le générateur de vide 8. La plaque profilée 15 définit ici quatre glissières 17, parmi lesquelles deux glissières 17 accueillent entre autres chacune deux lardons taraudés 18 dont la position peut être définie manuellement en faisant coulisser les lardons taraudés 18 dans les glissières 17. Outre la plaque profilée 15 et les lardons taraudés 18, les moyens de fixation comportent quatre entretoises 20 comportant un corps fileté 21 et un écrou long 22. Une première extrémité 23 de chaque corps fileté 21 est vissée dans un taraudage 24 d'un lardon taraudé 18, ce qui permet d'assembler par compression chaque entretoise 20 à la plaque profilée 15. Comme le corps fileté 21 de chaque entretoise 20 ne s'étend pas sur toute la longueur de l'écrou long 22 lorsque le corps fileté 21 est vissé dans le taraudage 24 du lardon correspondant, chaque entretoise 20 présente une extrémité libre taraudée 26 utilisée pour solidariser l'extrémité du bras de préhension avec la plaque profilée 15 et donc avec le caisson à vide 1.

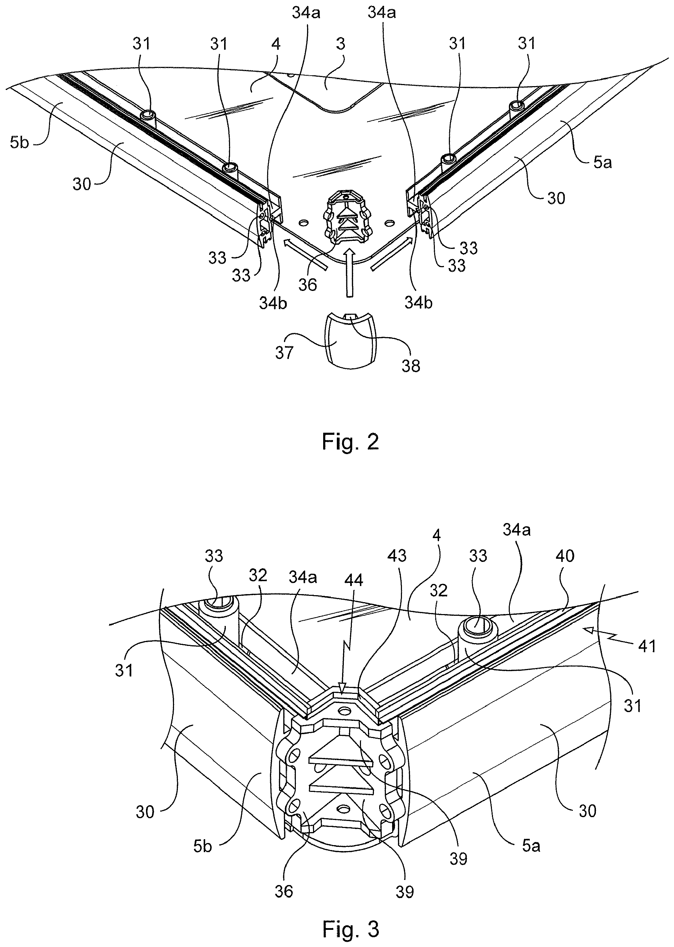

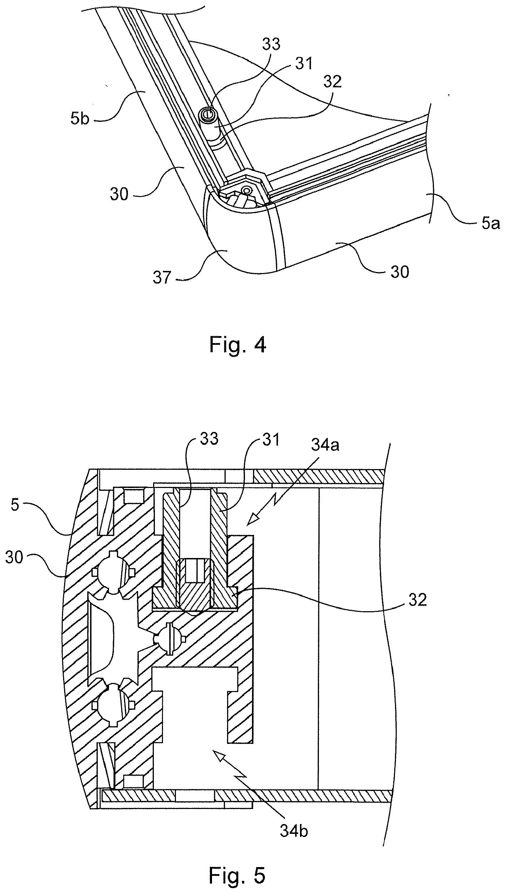

En référence aux figures 1 à 5, on décrit maintenant plus en détail les membrures 5, et la manière dont celles-ci sont assemblées à la première plaque 3 et à la deuxième plaque 4.

Les membrures 5 du caisson à vide 1 comprennent deux premières membrures 5a disposées dans la longueur du caisson et deux deuxièmes membrures 5b disposées dans la largeur du caisson à vide 1.

Au moins l'une de ces membrures 5 comporte un élément profilé. En l'occurrence, chaque membrure 5 comporte un élément profilé 30, de longueur L pour les premières membrures 5a et de longueur 1 pour les deuxièmes membrures 5b.

Des pions de fixation 31 sont disposés dans les membrures 5. Chaque pion de fixation 31 comporte une base circulaire 32 et un insert taraudé 33. Les bases circulaires 32 des pions de fixation 31 sont insérées dans des glissières supérieures 34a et dans des glissières inférieures 34b des profilés 30 des membrures 5.

La première plaque 3 est positionnée au-dessus des membrures 5, et est vissée aux inserts taraudés 33 des pions de fixation 31 situés dans les glissières supérieures 34a via des vis passant par des trous de fixation de la première plaque 3. De même, la deuxième plaque 4 est positionnée au-dessous des membrures 5, et est vissée aux inserts taraudés 33 des pions de fixation 31 situés dans les glissières inférieures 34b via des vis passant par des trous de fixation de la deuxième plaque 4. Le caisson à vide 1 comporte de plus à chacun de ses coins des moyens d'assemblage, en l'occurrence des coins de fixation 36 formant les coins du caisson à vide 1. Chaque coin de fixation 36 est vissé à une des premières membrures 5a et à une des deuxièmes membrures 5b via les taraudages intérieurs latéraux 33 desdites membrures 5a, 5b.

Une fois que la première plaque 3, la deuxième plaque 4, les premières membrures 5a, les deuxièmes membrures 5b et les coins de fixation 36 sont assemblés et vissés, des coins de protection 37 sont disposés à chaque coin du caisson à vide 1 pour fermer le caisson à vide 1 et pour créer une continuité le long des surfaces extérieures des parois latérales du caisson à vide 1 formées par les membrures 5. Les coins de protection 37 sont fixés aux coins de fixation 36. Chaque coin de protection 37 comporte à cet effet deux pattes de fixation 38 adaptés à être insérés dans deux orifices de réception complémentaires 39 des coins de fixation 36.

Le caisson à vide 1 comporte de plus des moyens d'étanchéité pour interdire, entre l'intérieur du caisson à vide 1 et l'extérieur du caisson à vide 1, un échange d'air autre qu'à travers l'orifice amont et les orifices aval. Les moyens d'étanchéité comprennent des joints plats 40 qui sont disposés le long des membrures 5 dans des premières gorges supérieures 41 et dans des premières gorges inférieures des membrures 5 pour s'étendre sur toute la longueur des membrures 5. Les moyens d'étanchéité comprennent de plus des joints toriques 43 situés sur les coins de fixation 36 et disposés dans des deuxièmes gorges supérieures 44 et dans des deuxièmes gorges inférieures des coins de fixation 36. Les joints plats 40 et les joints toriques 43 doivent être positionnés dans les premières gorges supérieures 41 et dans les deuxièmes gorges supérieures 44 avant que la première plaque 3 ne soit vissée aux membrures 5, et dans les premières gorges inférieures et dans les deuxièmes gorges inférieures avant que la deuxième plaque 4 ne soit vissée aux membrures 5.

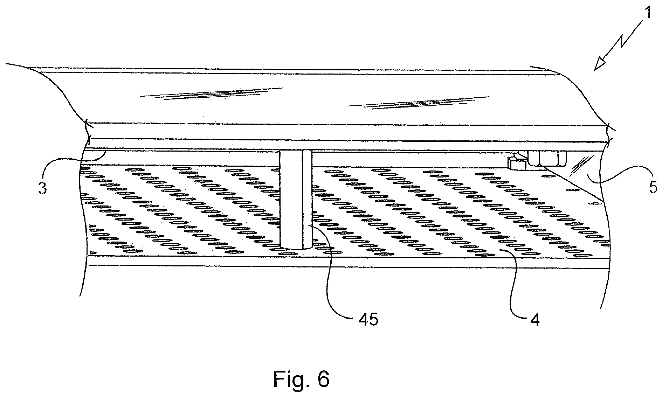

En référence à la figure 6, on équipe le caisson à vide 1 d'un ou de plusieurs pions de protection anti-implosion 45. Ces pions 45 permettent de renforcer la structure du caisson à vide 1 et d'améliorer la résistance de celui-ci aux contraintes provoquées par la différence de pression entre la pression externe et la pression interne du caisson. Les pions 45 sont positionnés à l'intérieur du caisson à vide 1 et s'étendent entre la première plaque 3 et la deuxième plaque 4.

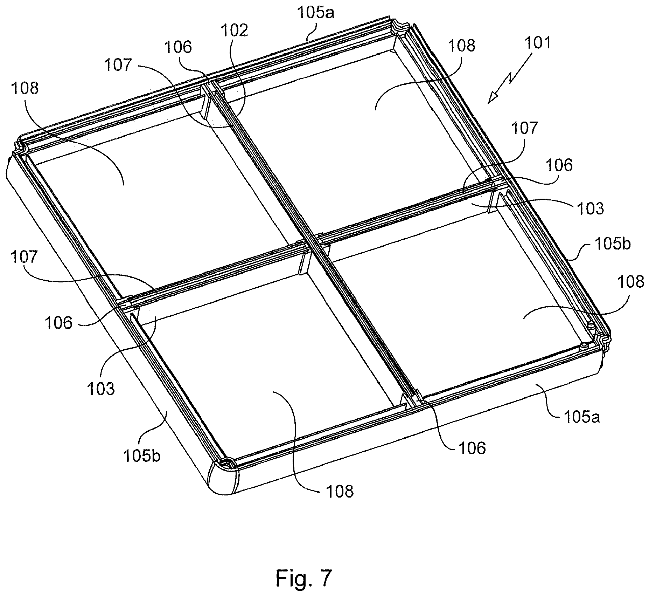

Dans un deuxième mode de réalisation, visible sur la figure 7, le caisson à vide de l'invention 101 comporte une traverse principale 102 et deux traverses secondaires 103 positionnées à l'intérieur du caisson à vide 101. La traverse principale 102 s'étend entre les centres de deux membrures opposées 105a situées en regard l'une de l'autre. Les traverses secondaires 103 s'étendent chacune entre le centre de l'une des deux autres membrures 105b et le centre de la traverse principale 102. Chaque extrémité des traverses principale et secondaires située au niveau d'une membrure 105 est fixée à ladite membrure 105 via une pièce de fixation 106 comprenant un profilé en forme de « U » présentant un évidement à l'intérieur duquel s'étend la membrure. Chaque traverse 102, 103 est munie de deux joints plats 107 disposés le long de la traverse dans des gorges supérieure et inférieure de la traverse 102, 103.

Les traverses 102, 103 forment ainsi des cloisons qui définissent à l'intérieur du caisson à vide 101 quatre zones de vide 108 étanches et indépendantes. Chaque zone de vide 108 peut être associée à un générateur de vide distinct, à un nombre de ventouses distincts, etc. Les traverses jouent aussi le rôle de renforts mécaniques de la structure du caisson.

L'invention n'est pas limitée aux modes de mise en œuvre particulier qui viennent d'être décrits, mais, bien au contraire, couvre toute variante entrant dans le cadre de l'invention telle que définie par les revendications.

Bien que l'on ait indiqué que les moyens de génération de vide sont constitués d'un générateur de vide multi-étagé, ces moyens de génération de vide peuvent être différents. Par exemple, dans un troisième mode de réalisation, visible sur la figure 8, le caisson à vide de l'invention 201 comporte des moyens de génération de vide formés par un simple éjecteur 208 comportant une unique buse d'injection. De même, les moyens de génération de vide utilisés peuvent comporter ou non des moyen de pilotage électrique du vide, des moyens de soufflage pour désolidariser les ventouses du caisson, des moyens d'affichage du niveau de vide de type vacuomètre, etc.

Bien que l'on ait décrit qu'un certain nombre d'éléments déformables s'étendent sur la deuxième plaque, l'invention s'applique à tout caisson à vide comportant au moins un élément déformable. Ces éléments déformables ne sont pas nécessairement des ventouses : il est bien sûr possible d'utiliser un autre type d'élément déformable, par exemple une plaque de mousse comportant au moins un point de préhension, c'est-à-dire un orifice de passage d'air permettant d'exercer un effort d'aspiration sur la pièce.

De même, bien que l'on ait précisé que les ventouses sont montées sur des inserts eux-mêmes fixés par vissage sur la deuxième plaque, tout autre moyen connu d'interface entre la deuxième plaque et les ventouses ou autres éléments déformables peut être utilisé : inserts buses, clapets à fuite (lorsque les éléments déformables sont constitués d'une plaque de mousse), etc.

Bien que l'on ait choisi d'illustrer l'invention en disposant les moyens de génération de vide sur la première plaque du caisson à vide, c'est-à-dire sur la paroi supérieure du caisson à vide, ceux-ci peuvent aussi être positionnés au niveau d'une paroi latérale, auquel cas l'orifice amont sera situé sur cette paroi latérale.

Bien que l'on ait décrit et représenté des caissons dans lesquels les moyens de fixation comportent une seule plaque profilée présentant une ouverture à l'intérieur de laquelle est positionné le générateur de vide, il est possible d'équiper le caisson de plusieurs plaques profilées, et notamment de deux plaques profilées positionnées de chaque côté du générateur de vide.

Bien que les parois supérieure et inférieure des caissons représentés ici soient toutes de forme générale rectangulaire, il est bien sûr possible d'envisager des caissons de forme différente, et notamment des caissons triangulaires. Dans ce cas, les coins de fixation sont adaptés pour que les membrures auxquelles ils sont fixés forment entre elles un angle inférieur ou supérieur à 90° selon la forme du caisson requise.

Bien que l'on ait indiqué que trois traverses définissent quatre zones de vide distinctes à l'intérieur du caisson, il est bien sûr possible d'utiliser un nombre de traverses différent pour obtenir au moins deux zones de vide distinctes.

Il est aussi possible de munir le caisson à vide modulaire de l'invention d'accessoires permettant d'améliorer la préhension ou de réaliser des fonctionnalités additionnelles complémentaires. On pourra par exemple équiper le caisson d'un ou de plusieurs capteurs de présence de pièce permettant de détecter si une pièce à manipuler est bien saisie par le caisson. On pourra aussi équiper le caisson de moyens de dépilage comportant par exemple au moins un générateur de vide et une ventouse pour séparer une pièce, telle qu'une feuille de tôle, d'autres pièces avec lesquelles elle est empilée. On pourra de plus munir le caisson à vide de moyens mécaniques de maintien de la pièce à manipuler, notamment de moyens de maintien rabattables sur le côté du caisson.

## Revendications

1. Caisson à vide modulaire pour préhension d'une pièce (2), comportant :
- une première plaque (3) formant une paroi supérieure du caisson (1) ;
- une deuxième plaque (4) percée par au moins un orifice aval et formant une paroi inférieure du caisson (1) ;
- des membrures (5) auxquelles sont fixées des bords de la première et de la deuxième plaques (3, 4) et qui forment des parois latérales du caisson (1) ;
- des moyens d'assemblage (36) pour assembler la première plaque (3), la deuxième plaque (4) et les membrures (5) ;
- au moins un orifice amont situé sur l'une des parois du caisson (1) ;
- des moyens d'étanchéité (40, 43) pour interdire un échange d'air entre l'intérieur du caisson (1) et l'extérieur du caisson (1) autre qu'à travers l'orifice amont et l'orifice aval ;
- des moyens de génération de vide (8) adaptés à aspirer l'air contenu à l'intérieur du caisson via l'orifice amont pour générer du vide dans le caisson ;
- au moins un élément déformable (13) s'étendant sur la deuxième plaque (4) et présentant un orifice de passage d'air en regard de l'orifice aval pour former une surface de contact étanche avec la pièce (2) lorsque l'air contenu à l'intérieur du caisson (1) est aspiré ;
et **caractérisé en ce que** les moyens d'assemblage (36) forment des coins du caisson à vide (1).

2. Caisson à vide modulaire selon l'une des revendications précédentes, dans lequel au moins une membrure (5) comporte un élément profilé (30).

3. Caisson à vide modulaire selon l'une des revendications précédentes, dans lequel la première et la deuxième plaques (3, 4) ainsi que les moyens d'assemblage (36) sont vissés aux membrures (5).

4. Caisson à vide modulaire selon l'une des revendications précédentes, dans lequel les moyens d'étanchéité comprennent au moins un joint plat (40) s'étendant sur une longueur d'au moins une des membrures.

5. Caisson à vide modulaire selon l'une des revendications précédentes, comportant en outre des moyens de fixation (15, 20) situés sur la première plaque (3) et agencés pour permettre de manipuler le caisson (1) .

6. Caisson à vide modulaire selon la revendication 5, dans lequel les moyens de fixation comportent au moins une partie profilée (15).

7. Caisson à vide modulaire selon l'une des revendications précédentes, dans lequel l'élément déformable comporte au moins une ventouse (13).

8. Caisson à vide modulaire selon l'une des revendications précédentes, dans lequel les moyens de génération de vide fonctionnent par effet Venturi.

9. Caisson à vide modulaire selon l'une des revendications précédentes comportant au moins une traverse (102, 103) définissant à l'intérieur du caisson au moins deux zones de vide (108) étanches et indépendantes.

10. Caisson à vide modulaire selon l'une des revendications précédentes comportant au moins un pion de protection anti-implosion (45) qui s'étend entre la première plaque (3) et la deuxième plaque (4).

## Patentansprüche

1. Modularer Vakuumkasten zum Greifen eines Teils (2), umfassend:
- eine erste Platte (3), die eine obere Wand des Kastens (1) bildet;
- eine zweite Platte (4), die von mindestens einer stromabwärtigen Öffnung durchsetzt ist und eine untere Wand des Kastens (1) bildet;
- Rahmenelemente (5), an denen Ränder der ersten und der zweiten Platte (3, 4) befestigt sind und die seitliche Wände des Kastens (1) bilden;
- Montagemittel (36) zum Zusammenbauen der ersten Platte (3), der zweiten Platte (4) und der Rahmenelemente (5);
- mindestens eine stromaufwärtige Öffnung, die sich an einer der Wände des Kastens (1) befindet;
- Dichtungsmittel (40, 43), um einen anderen Luftaustausch zwischen dem Inneren des Kastens (1) und dem Äußeren des Kastens (1) als durch die stromaufwärtige und die stromabwärtige Öffnung zu verhindern;
- Vakuumerzeugungsmittel (8), die geeignet sind, die im Inneren des Kastens enthaltene Luft über die stromaufwärtige Öffnung anzusaugen, um in dem Kasten ein Vakuum zu erzeugen;
- mindestens ein verformbares Element (13), das sich auf der zweiten Platte (4) erstreckt und eine Luftdurchtrittsöffnung gegenüber der stromabwärtigen Öffnung aufweist, um eine dichte Kontaktfläche mit dem Teil (2) zu bilden, wenn die im Inneren des Kastens (1) enthaltene Luft angesaugt wird;
und **dadurch gekennzeichnet, dass** die Montagemittel (36) Ecken des Vakuumkastens (1) bilden.

2. Modularer Vakuumkasten nach einem der vorhergehenden Ansprüche, bei dem mindestens ein Rahmenelement (5) ein Profilelement (30) umfasst.

3. Modularer Vakuumkasten nach einem der vorhergehenden Ansprüche, bei dem die erste und die zweite Platte (3, 4) sowie die Montagemittel (36) mit den Rahmenelementen (5) verschraubt sind.

4. Modularer Vakuumkasten nach einem der vorhergehenden Ansprüche, bei dem die Dichtungsmittel mindestens eine flache Dichtung (40) umfassen, die sich über eine Länge mindestens eines der Rahmenelemente erstreckt.

5. Modularer Vakuumkasten nach einem der vorhergehenden Ansprüche, ferner umfassend Befestigungsmittel (15, 20), die sich auf der ersten Platte (3) befinden und ausgebildet sind, um ein Hantieren mit dem Kasten (1) zu gestatten.

6. Modularer Vakuumkasten nach Anspruch 5, bei dem die Befestigungsmittel mindestens ein Profilteil (15) umfassen.

7. Modularer Vakuumkasten nach einem der vorhergehenden Ansprüche, bei dem das verformbare Element mindestens einen Saugnapf (13) umfasst.

8. Modularer Vakuumkasten nach einem der vorhergehenden Ansprüche, bei dem die Vakuumerzeugungsmittel mittels Venturi-Effekt arbeiten.

9. Modularer Vakuumkasten nach einem der vorhergehenden Ansprüche, mindestens umfassend eine Querstrebe (102, 103), die im Inneren des Kastens mindestens zwei dichte und voneinander unabhängige Vakuumzonen (108) definiert.

10. Modularer Vakuumkasten nach einem der vorhergehenden Ansprüche, umfassend mindestens einen Anti-Implosions-Schutzzapfen (45), der sich zwischen der ersten Platte (3) und der zweiten Platte (4) erstreckt.

## Claims

1. A modular vacuum gripper for taking hold of a part (2), said modular vacuum gripper comprising:
- a first plate (3) forming a top wall of the vacuum gripper (1);
- a second wall (4) provided with at least one downstream orifice and forming a bottom wall of the vacuum gripper (1);
- framework members (5) to which edges of the first and second plates (3, 4) are fastened and that form side walls of the vacuum gripper (1);
- assembly means (36) for assembling the first plate (3), the second plate (4) and the framework members (5) ;
- at least one upstream orifice situated on one of the walls of the vacuum gripper (1);
- sealing means (40, 43) for preventing exchange of air between the inside of the vacuum gripper (1) and the outside of the vacuum gripper (1) other than via the upstream orifice and via the downstream orifice;
- vacuum generation means (8) adapted to suck out the air contained inside the vacuum gripper via the upstream orifice so as to generate a vacuum inside the vacuum gripper; and
- at least one deformable element (13) extending over the second plate (4) and having an air passage orifice facing the downstream orifice so as to form a sealed contact surface with the part (2) when the air contained inside the vacuum gripper (1) is sucked out;
and **characterized in that** the assembly means (36) form corners of the vacuum gripper (1).

2. A modular vacuum gripper according to any preceding claim, wherein at least one framework member (5) includes a shaped-section element (30).

3. A modular vacuum gripper according to any preceding claim, wherein the first and second plates (3, 4) and the assembly means (36) are screwed to the framework members (5).

4. A modular vacuum gripper according to any preceding claim, wherein the sealing means comprise at least one flat seal (40) extending over a length of at least one of the framework members.

5. A modular vacuum gripper according to any preceding claim, further including fastening means (15, 20) situated on the first plate (3) and arranged to enable the vacuum gripper (1) to be manipulated.

6. A modular vacuum gripper according to claim 5, wherein the fastening means include at least one shaped-section portion (15).

7. A modular vacuum gripper according to any preceding claim, wherein the deformable element includes at least one suction cup (13).

8. A modular vacuum gripper according to any preceding claim, wherein the vacuum generation means operate by Venturi effect.

9. A modular vacuum gripper according to any preceding claim, including at least one crosspiece (102, 103) defining, inside the vacuum gripper, at least two sealed and independent vacuum zones (108).

10. A modular vacuum gripper according to any preceding claim, including at least one anti-implosion protective stud (45) that extends between the first plate (3) and the second plate (4).
